# EUROPÄISCHE PATENTANMELDUNG

(11) **EP 2 098 284 A2**
(43) Veröffentlichungstag der Anmeldung: **09.09.2009**
(21) Anmeldenummer: 09002040.5
(22) Anmeldetag: 13.02.2009
(51) Int. Cl.: B01F 5/06, G01N 30/06

(54) **Kapillarartige Verbindung für die Flüssigkeitschromatographie, insbesondere für die Hochleistungsflüssigkeitschromatographie mit verminderter Dispersion und verbesserten thermischen Eigenschaften**

(30) Priorität: 05.03.2008 DE 102008012798
(71) Anmelder: Dionex Softron GmbH, 82110 Germering (DE)
(72) Erfinder: Hochgraeber, Hermann, Dipl.-Ing.Univ., 94560 Offenberg (DE); Wiechers, Joachim, Dr., 82152 Planegg (DE)
(74) Vertreter: Eder, Christian

(57) **Zusammenfassung**

Die Erfindung betrifft eine kapillarartige Verbindung (50,55) zur Leitung von Flüssigkeiten, insbesondere für die Flüssigkeitschromatographie, wobei die Verbindung (50,55) in Richtung einer Hauptströmungsrichtung wechselnde Innenquerschnitte in Form und/oder Lage aufweist, sowie eine Anordnung für die Flüssigkeitschromatographie mit wenigstens einer derartigen kapillarartigen Verbindung (50,55).

## Beschreibung

Die Erfindung betrifft kapillarartige Verbindungen mit den Merkmalen des Oberbegriffs des Patentanspruchs 1, wie sie beispielsweise in der Flüssigkeitschromatographie, insbesondere der Hochleistungsflüssigkeitschromatographie (HPLC) Anwendung finden.

In einer HPLC-Analge sind die chromatographischen Komponenten, wie Eluentenreservoir, Pumpe, Ventile, Mischkammer, Injektor, Trennsäule, Detektoreinheit etc., überwiegend durch Kapillaren fluidisch miteinander verbunden. In diesen Verbindungen fließt ein teilweise unter Hochdruck stehender Flüssigkeitsstrom, der von einer geeigneten Pumpe gefördert wird. Im Injektor der HPLC-Anlage wird die zu untersuchende Probe injiziert und fließt darauf hin über eine fluidische Verbindung zur Trennsäule. Das in den Verbindungen eingeschlossene Volumen soll hierbei möglichst klein sein, damit die Laufzeiten einer chromatographischen Analyse möglichst kurz werden, und die Übergänge zwischen Probe und Laufinittel (Eluent) und/oder zwischen Laufmitteln unterschiedlicher Zusammensetzung durch die in den Kapillaren entstehenden Strömungsprofile möglichst wenig verändert werden.

Dies kann sowohl durch Reduzierung der Verbindungslänge als auch durch Verkleinerung des Innendurchmessers der Kapillaren erreicht werden. Eine gewisse minimale Länge dieser Verbindungen lässt sich jedoch nicht unterschreiten, da die Orte der Anschlüsse der chromatographischen Komponenten einer HPLC Anlage wegen deren Form und Ausdehnung nicht beliebig nah nebeneinander platziert werden können. Auch der Innendurchmesser der Kapillaren kann nicht beliebig verkleinert werden, da sonst ein zu hoher Rückdruck durch eine solche Verbindung erzeugt und die Verstopfungsgefahr erhöht wird, wodurch die Robustheit der HPLC-Anlage leidet.

Derartige am Markt erhältliche Verbindungen sind in der HPLC als in gewissem Maße flexible Kapillaren mit kreisförmigem Querschnitt meist aus Stahl ausgeführt.

Betrachtet man nach der Injektion einer Probe in den Flüssigkeitsstrom die über den Kapillarquerschnitt entstehende gemittelte Probenkonzentration am Ende einer Verbindungskapillare, erhält man keine sprungartigen Übergänge zwischen Laufmittel und Probe mehr. Je länger eine Kapillare ist, desto flacher sind die Übergänge. Dieser Effekt der Längsdurchmischung durch ungleiche Strömungsgeschwindigkeiten wird in der HPLC Dispersion genannt.

Die Dispersion wirkt sich aber nachteilig auf die Trennung der einzelnen Probenbestandteile am Ende einer Chromatographiesäule aus. Auf dem Weg zum Detektor werden zeitlich noch getrennt aus der Säule austretende Probenbestandteile durch die Dispersion in der Verbindung zwischen Säule und Detektor longitudinal durchmischt, so dass eine Trennung und Quantifizierung der beiden Probenbestandteile im Chromatogramm nicht mehr möglich ist.

Auch die Dispersion in der Verbindung zwischen Injektor und Säule wirkt sich nachteilig auf die Trennleistung einer HPLC-Anlage aus, da ein einmal verbreitertes, an deren Enden verdünntes Probenvolumen auch verbreiterte und verdünnte Probenvolumina am Ausgang der Säule verursacht.

Der Erfindung liegt daher die Aufgabe zugrunde, fluidische kapillarartige Verbindungen für die Komponenten in einer Anlage für die Flüssigkeitschromatographie, insbesondere die Hochleistungsflüssigkeitschromatographie sowie eine Anordnung für die Flüssigkeitschromatographie zu schaffen, die eine möglichst kleine Durchmischung in Hauptströmungsrichtung hintereinander folgender Stoffe verursacht, die Trennleistung einer Anlage optimiert, und somit ein höherer Probendurchsatz aufgrund der kürzeren Probenlaufzeiten erreicht werden kann, wodurch die Rentabilität einer Anlage steigt.

Ziel der erfindungsgemäßen kapillarartigen Verbindung ist daher der Flüssigkeitstransport über eine vorgegebene Strecke mit möglichst geringer Dispersion bei vertretbarem Rückdruck.

Die Erfindung löst diese Aufgabe mit den Merkmalen des Patentanspruche 1 und 8.

Die Erfindung geht von der Erkenntnis aus, dass sich in im Wesentlichen zylindrisch ausgeführten fluidischen Verbindungen bei laminarer Strömung ein parabolisches Strömungsprofil ausbildet. Ein derartiges Strömungsprofil entsteht bei bekannten Kapillaren mit kreisförmigem Querschnitt, da selbst in (zur Verbindung der einzelnen Komponenten notwendigen) Biegungen mit im Vergleich zum Durchmesser der Kapillaren großem Radius, in diesen Kapillaren eine im Wesentlichen zylindrische, in geraden Strecken sogar streng zylindrische Flüssigkeitssäule beinhaltet ist.

Das Strömungsprofil in solchen zylindrischen Flüssigkeitssäulen mit feststehender Wand bildet sich aber parabolisch aus, sofern die Strömungsgeschwindigkeiten im laminaren Bereich bleiben. In der Mitte der Kapillare, entlang der Zylinderachse ergibt sich dabei die höchste Flussgeschwindigkeit in axialer Richtung. An den Wänden ist die Flussgeschwindigkeit dagegen theoretisch Null, wenn man den Einfluss der Diffusion außer Acht lässt, die in der Praxis für einen Austausch der äußersten Randschicht der Flüssigkeitssäule sorgt. Vernachlässigt man diese Diffusionseffekte, so ergibt sich für die am schnellsten fließenden Teile der Flüssigkeit eine Strömungsgeschwindigkeit, deren Betrag auf Grund der Massenerhaltung doppelt so hoch ist wie die mittlere Strömungsgeschwindigkeit der gesamten Flüssigkeitssäule.

Wird in einen solchen Flüssigkeitsstrom eine Probe injiziert, so erhält man daher im ersten Moment nach der Injektion zwei mehr oder weniger scharf ausgeprägte Übergänge zwischen Probe und Laufmittel, die idealerweise ebene Kreisflächen senkrecht zur Mittelachse der Kapillare darstellen. Durch die über dem Kapillarquerschnitt ungleichen Strömungsgeschwindigkeiten in der Kapillaren werden diese Grenzflächen aber zunehmend verformt, so dass die beiden Kreisflächen zu Paraboloiden werden.

Dieses parabolische Profil stellt hinsichtlich der durch die fluidische Verbindung erzeugten Längsdurchmischung von in Hauptströmungsrichtung aufeinanderfolgenden Flüssigkeiten nachteiligerweise einen Worst Case dar.

Verändert man erfindungsgemäß die kreisförmige Form und/oder Lage des Verbindungsquerschnitts in wechselnder Weise entlang des Verlaufs der Strömung bzw. der Hauptströmungsrichtung (welche im unverbauten geraden Zustand der kapillarartigen Verbindung deren Mittellängsachse entspricht), erzwingt man wechselnde radiale Strömungskomponenten und verstärkt dadurch die radiale Durchmischung der strömenden Flüssigkeiten in der Verbindung und stört und behindert dadurch die Ausbildung des vom streng kreisförmig ausgebildeten Querschnitt her bekannten parabolischen Strömungsprofils.

Das Ziel der Erfindung wird also dadurch erreicht, dass die Form der kapillarartigen Verbindung in regelmäßigen oder unregelmäßigen Abständen immer wieder geändert wird, so dass das übliche parabolische Geschwindigkeitsprofil an diesen Stellen gestört wird. Hierdurch wird die Verteilung der Durchlaufzeiten durch die Kapillare schmaler, was einer verringerten Dispersion entspricht. Indem die Änderungen der Form und/oder Lage des Verbindungsquerschnitts nicht rotationssymmetrisch zur Hauptströmungsrichtung sind, wird erreicht, dass ein strömendes Molekül immer wieder auf einen Pfad mit anderer relativer Strömungsgeschwindigkeit wechseln muss.

In beliebiger Ausgestaltung der Erfindung kann der Abstand zwischen zwei aufeinanderfolgenden Änderungen weniger als 20 mm, vorzugsweise weniger als 10 mm oder gar weniger, beispielsweise 5, 4, 3, 2 oder 1 mm betragen, so dass sich die radiale Durchmischung entsprechend verstärkt, da, je öfter die Form und/oder Lage des durchströmten Querschnitts längs der Hauptströmungsrichtung verändert wird, desto besser erfolgt die radiale Durchmischung, und desto schwächer bildet sich das parabolische Strömungsprofil aus und desto stärker wird eine Längsdurchmischung gehemmt. Die erfindungsgemäßen Kapillaren weisen dabei Abmessungen, beispielsweise einen Innendurchmesser im Bereich von 10 µm bis 1000 µm, insbesondere 100 µm bis 300µm und einer gegenüber dem Innendurchmesser sehr viel größeren Länge im Bereich von mehreren Millimetern bis zu einigen hundert Millimetern auf.

In bevorzugter Ausgestaltung der Erfindung ist die kapillarartige Verbindung im Wesentlichen rohrförmig, beispielsweise aus (Edel-)Stahl, Glas Kunststoff, insbesondere PEEK, Titan, Keramik oder einem Verbundwerkstoff daraus, ausgebildet, so dass die Mittelpunkte der in ihrer Form wechselnden Innenquerschnittsflächen auf einer Achse liegen. Hierbei kann die Verbindungskapillare besonders einfach herstellt werden, indem sie in vorzugsweise regelmäßigen Abständen beispielsweise senkrecht zur Hauptströmungsrichtung gequetscht wird, so dass der vorher zylindrische Querschnitt an den gequetschten Stellen zur Ellipse wird. Eine weitere Verbesserung der radialen Durchmischung kann zudem erreicht werden, wenn die jeweils gleichlangen Halbachsen zweier aufeinanderfolgender Ellipsen senkrecht aufeinander stehen.

In weiterer Ausgestaltung der Erfindung kann eine zusätzliche Verstärkung der radialen Durchmischung erreicht werden, indem man vor der Ausformung der Ellipsen einen länglichen Festkörper (Kern), zum Beispiel einen Vollzylinder in die Kapillare einfügt, dessen Außendurchmesser kleiner als der Innendruchmesser der unverformten Kapillare ist. Hierdurch wird der Ort der schnellsten Strömung in der zylindrischen Kapillare vorzugsweise konzentrisch besetzt und die strömende Flüssigkeit zur Kapillarwand hin verdrängt. Hierbei kann der Kern vorteilhafterweise einen Anschlag für die Begrenzung der Verformung der zylindrischen Kapillare bilden, indem er die Länge der jeweils kurzen Halbachsen der Ellipsen nach unten begrenzt, und auf diese Weise die Herstellung vereinfacht. Selbstverständlich ist es aber auch denkbar, dass der Kern in einem gewissen Toleranzbereich ohne permanente Berührung bzw. formschlüssige Verbindung zur Innenwand der Kapillare frei beweglich eingebracht ist, und in diesem Bereich immer noch im Wesentlichen das Zentrum des Innenquerschnitts belegt.

In einer anderen Ausführungsform der Erfindung folgen die Mittelpunkte der weitgehend kreisförmigen Querschnitte einer Kapillare einer Linie, die quer zur Hauptströmungsrichtung, zum Beispiel in einer Ebene sinusförmig, vorzugsweise weitgehend periodisch, ausgelenkt (gestaucht) ist. Auch bei dieser Ausführungsform kann in weiterer Ausgestaltung analog zum vorstehend erläuterten Beispiel ein Kern eingefügt werden, welcher durch die Verdrängung der schnellsten Strömung aus dem Zentrum durch einen ortsfesten Körper zu einer weiteren Verbesserung der radialen Durchmischung zu Ungunsten der für die Trennleistung schädlichen Längsdurchmischung führt. Um keine unnötige Ausdehnung des Volumens zu erhalten, erfolgen die Auslenkungen in einem Maße, so dass die Mantelkurvenbahnlänge (des Längsquerschnitts) der Kapillare zu deren (gestauchte) längliche Erstreckung im Verhältnis kleiner 2:1, vorzugsweise kleiner 1,5:1 ist.

Der eingebrachte längliche Kern kann hierbei mit den Enden der Kapillare bündig abschließen, nach innen versetzt liegen oder auch überstehen, beispielsweise um in einen anderen Anschluss (Komponente oder andere Kapillare) hineinzuragen oder in einer Schraubverbindung örtlich fixiert zu werden.

Selbstverständlich sind unterschiedlichste Ausführungsformen der wechselnden Querschnittsmodifikationen in Größe und/oder Form, wie beispielsweise quadratisch, rechteckig, dreieckig, oval untereinander und/oder in der Größe denkbar.

Weitere Ausführungsformen der Erfindung ergeben sich aus den Unteransprüchen.

Die Erfindung wird nachstehend anhand eines in der Zeichnung dargestellten Ausführungsbeispiels näher erläutert. In der Zeichnung zeigen:
- Fig. 1: eine schematische Längsschnittdarstellung einer Kapillare eines HPLCSystems mit einer in eine erste Flüssigkeit eingebrachten (injizierten) zweiten Flüssigkeitsmenge, schwarz dargestellt, und den prinzipiellen Verlauf der Grenzschichten zwischen den beiden Flüssigkeiten zum Zeitpunkt unmittelbar nach der Injektion (A), und zu einem späteren Zeitpunkt unter verschiedenen Annahmen bezüglich Diffusion und Form der Kapillare. Zur Verbesserung der Darstellung der Gegebenheiten ist von der injizierten Flüssigkeit nur eine dünne Schicht im Bereich der Kapillarmitte dargestellt;
- Fig. 2: den Verlauf eines ersten Messsignals eines UV-Detektors zur Messung der Konzentration einer zuvor injizierten Probe, welcher direkt an das Ende einer Kapillaren angeschlossen wurde, die streng zylindrisch ausgeformt ist. Das zweite Messsignal zeigt den Verlauf nach einer Injektion der selben Probenmenge in die selbe Kapillare, jedoch mit erfindungsgemäß veränderten periodisch elliptischen Querschnittsmodifikationen längs der Hauptströmungsrichtung, mit 20 Modifikationen auf 200 mm Länge;
- Fig. 3a: schematische Darstellung einer ersten Ausführungsform einer erfindungsgemäß ausgeformten Kapillare mit periodisch elliptischen Querschnittsmodifikationen in perspektivischer Vorderansicht;
- Fig. 3b: schematische Darstellung der ersten Ausführungsform nach Fig. 3a in perspektivischer Seitenansicht;
- Fig. 4a: schematische Darstellung einer zweiten Ausführungsform einer erfindungsgemäß ausgeformten Kapillare mit periodisch quer zur Hauptströmungsrichtung versetzten kreisförmigen Querschnitten in perspektivischer Seitenansicht;

- Fig. 4b: schematische Darstellung der zweiten Ausführungsform nach Fig. 4a in perspektivischer Vorderansicht;
- Fig. 5: schematische Darstellung einer Variation der ersten Ausführungsform nach Fig. 3a und Fig. 3b mit vollzylindrischem Kern und
- Fig. 6: schematische Darstellung einer Variation der zweiten Ausführungsform nach Fig. 4a und Fig. 4b mit vollzylindrischem Kern.

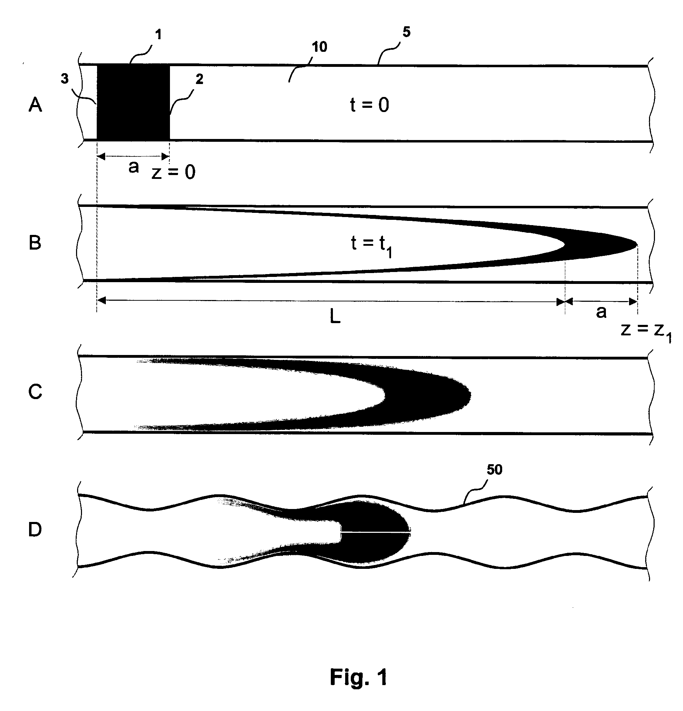

Die in Fig. 1 in Teil A bis C untereinander dargestellten Fälle zeigen nach dem Einbringen (Injektion) einer zweiten Flüssigkeitsmenge (Probe) **1** in eine erste Flüssigkeitsmenge (Laufmittel bzw. Eluent) **10** den prinzipiellen Verlauf (Strömung in Fig. 1 von links nach rechts) der Grenzschichten zwischen den beiden Flüssigkeiten in einer im Stand der Technik bekannten zylinderförmigen Kapillare **5** eines HPLC-Systems.

Wie aus Teil A ersichtlich, füllt zum Zeitpunkt t = 0 unmittelbar nach der Injektion der Probe **1** in die Kapillare **5** die injizierte Probenmenge **1** ein zunächst zylindrisches Volumen mit den kreisförmigen Grundflächen **2** und **3** mit der Höhe **a** aus.

Die in Teil B dargestellte Situation zeigt, wie, unter der Annahme, dass die Flüssigkeit in der Kapillare laminar strömt, zu einem späteren Zeitpunkt t = t₁ die Grundflächen **2** (in Bewegungsrichtung vom) und **3** (in Bewegungsrichtung hinten) zu Paraboloiden verformt werden, jedoch unter Vernachlässigung einer zwischen den Flüssigkeiten stattfindenden Diffusion. Teil C zeigt die Situation in der Kapillare **5** zum Zeitpunkt t = t₁, dagegen unter der Annahme, dass eine Diffusion zwischen den Flüssigkeiten **1, 10** in der zylindrischen Kapillare stattfindet.

In Teil D ist dagegen dargestellt, wie sich die Grenzschichten in einer erfindungsgemäßen Kapillare **50** mit periodisch elliptischen Querschnittsmodifikationen zum Zeitpunkt t = t₁, ausbilden unter der Annahme, dass eine Diffusion zwischen den Flüssigkeiten **1, 10** stattfindet.

Zur Verbesserung der Darstellung der Gegebenheiten ist in Fig. 1 in Teil B bis D von der injizierten Flüssigkeit nur eine dünne Schicht im Bereich der Kapillarmitte dargestellt.

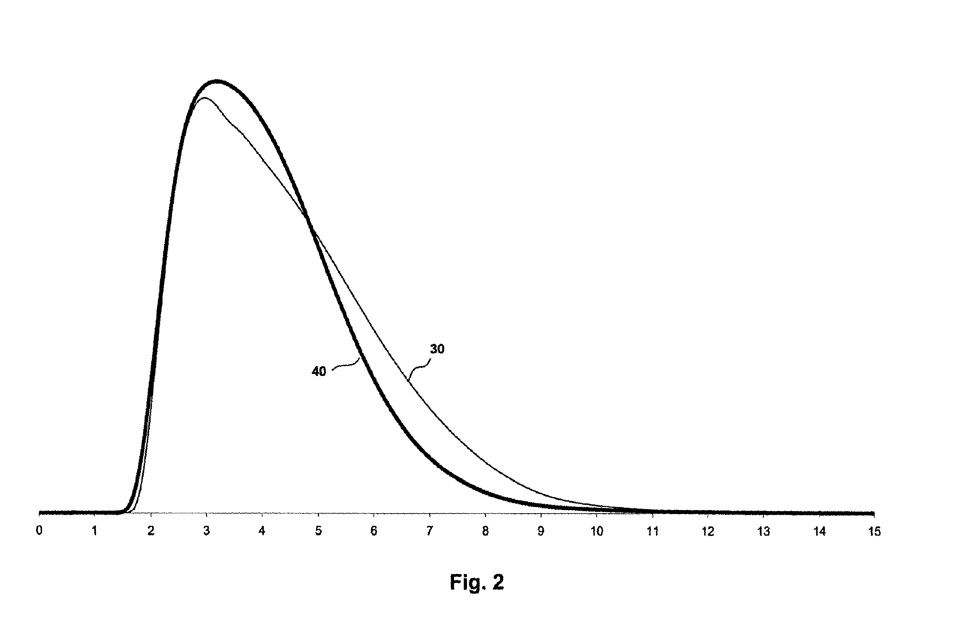

Fig. 2 zeigt den Vergleich zweier zur Konzentration der Probe in dem Laufmittel proportionalen Detektorsignale **30** und **40** in Abhängigkeit der Zeit, wie sie nach der Injektion einer Probenmenge von 10µL in eine Kapillare mit einem nominellen Innendurchmesser von 350µm und einer Länge von 250mm am Ende der laminar durchströmten Kapillaren **10** und **20** gemessen werden können. Die dünn dargestellte Kurve **30** zeigt das Signal bei der Injektion in eine streng zylindrische Kapillare **10.** Die fett dargestellte Kurve **40** zeigt das Signal einer Injektion derselben Probemenge in eine erfindungsgemäße Kapillare, die im Unterschied zur vorgenannten streng zylindrischen Kapillare vorher mit 20 Paaren von aufeinander senkrecht stehenden elliptischen Querschnittsmodifikationen versehen wurde. Hierbei ist deutlich zu erkennen, dass die Querschnittsverformungen zu einer Verkleinerung der Peakbreite bzw. Dispersion führen, und so das Auflösungsvermögen einer HPLC Anlage durch Einsatz solcher Kapillaren verbessert werden kann.

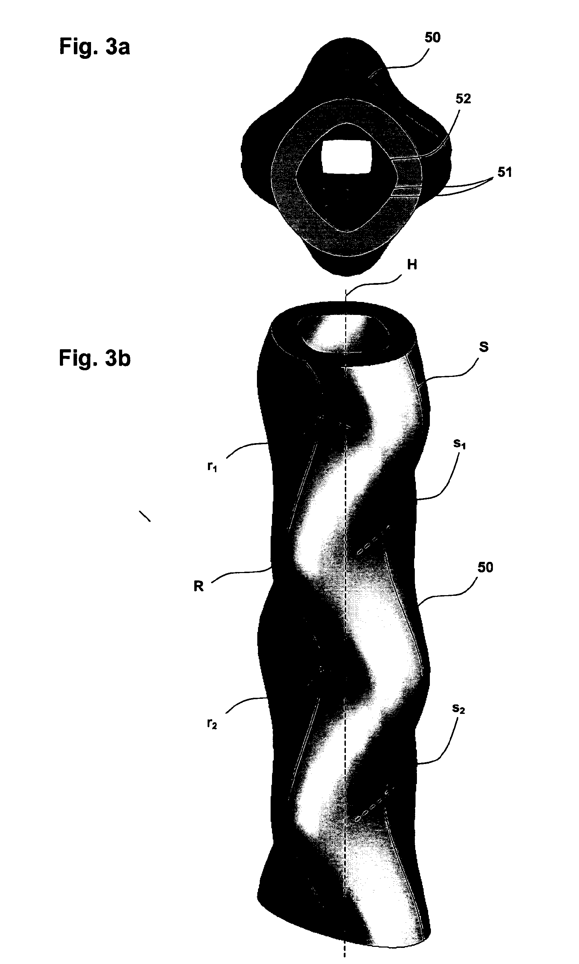

In Fig. 3a und Fig. 3b ist ein kurzes Stück einer Kapillare **50** dargestellt, wie sie zur Erzeugung der in Fig. 2 dargestellten Ergebnisse verwendet wurde. Wie ersichtlich entstehen die erfindungsgemäß veränderten, in diesem Fall vorzugsweise periodisch elliptischen Querschnittsmodifikationen längs der Hauptströmungsrichtung in der Kapillare **50** durch Quetschungen **r₁, s₁, r₂, s₂** welche sich in regelmäßigen Abständen, beispielsweise von 10 mm wiederholen. Hierdurch entstehen an der Außenseite der Kapillare **50** in aufeinander senkrecht stehenden Längsschnittebenen mit gemeinsamer Mittelachse die Bahnkurven R und S statt wie bei einer herkömmlichen streng zylindrischen Kapillare **5** entsprechende Geraden. Wie jeweils in Fig. 3b als gestrichelte Linien angedeutet, liegen Quetschungen senkrecht zu Bahnkurven R und S und damit senkrecht zur Hauptströmungsrichtung H der Kapillare **50** vor.

Hierbei ist anzumerken, dass die Hauptströmungsrichtung im unverbauten (und geraden, vorzugsweise zylindrischen) Zustand einer Kapillare deren Mittellängslachse entspricht. Ist die Kapillare zur Verbindung von Komponenten in einem üblicherweise im Vergleich zum Durchmesser wesentlich größeren Radius gebogen, ist die Hauptströmungsrichtung durch den kürzesten Weg bzw. den Weg des geringsten Widerstandes innerhalb der Kapillare bestimmt.

Hierdurch ergeben sich die in Fig. 3a erkennbaren, entlang der Längsachse (Hauptströmungsrichtung) sich in ihrer Form ändernden, elliptischen Querschnitte an der entsprechenden Stelle an der Innenseite der Kapillare **50,** welche durch jeweils einander gegenüberliegende Linien **51** infolge einander gegenüberliegender Quetschungen an der Außenseite der Kapillare **50** entstanden sind. Obwohl die vorzugsweise senkrecht zueinander und senkrecht zur Hauptströmungsrichtung stehenden Quetschungen in dieser Ausführungsform periodisch dargestellt sind, ist es selbstverständlich auch denkbar, die Verformungen an der Innenseite auch unregelmäßig mittels nachträglichen Quetschens einer zylindrischen Kapillare oder auf andere Art und Weise auszubilden.

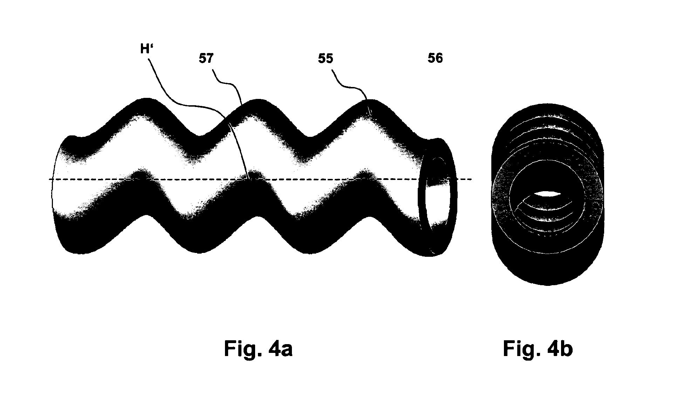

Fig. 4a und Fig. 4b zeigen ein kurzes Stück einer alternativen zweiten Ausführungsform einer erfindungsgemäßen Kapillare **55** mit vorzugsweise periodisch quer zur Hauptströmungsrichtung versetzten kreisförmigen Querschnitten, die im Vergleich zu einer streng zylindrischen Kapillare ebenfalls weniger Dispersion in den Verbindungen zwischen den Komponenten einer HPLC-Anlage erzeugt. In dieser Ausführungsform bleibt zwar die Innenquerschnittsfläche als Fläche, insbesondere Kreisfläche gleichbleibender Abmessung erhalten. Allerdings wird durch eng aufeinanderfolgende (in der Zeichenebene in Fig. 4a liegende) beispielsweise sinusförmige Auslenkungen **57** mit verglichen zum Innenradius geringerer Amplitude, in Hauptströmungsrichtung H' gesehen, ebenfalls eine Querschnittsveränderung pro Auslenkung in Form einer durch den Querschnittsmittelpunkt führenden, insbesondere sinusförmigen, Linie erreicht. Durch dieses Versetzen kreisförmiger Querschnitte entstehen entlang der Hauptströmungsrichtung wiederum sich in ihrer Lage verändernde, in Flussrichtung wirksame Querschnitte, so dass in Hauptströmungsrichtung gesehen ein Auge **56** erzeugt wird.

Selbstverständlich ist es statt der dargestellten Auslenkung innerhalb einer Längsschnittebene auch denkbar, Auslenkungen in mehreren Ebenen, insbesondere senkrecht aufeinanderstehenden Längsschnittebenen (mit der Längsmittelachse als Schnittlinie) auszubilden. Auch können die Merkmale der vorgenannten Ausführungsformen beliebig miteinander zu entsprechenden Mischformen kombiniert werden, wobei auch das Einbringen eines nachfolgend erläuterten Kerns in derartigen Mischformen vorstellbar ist.

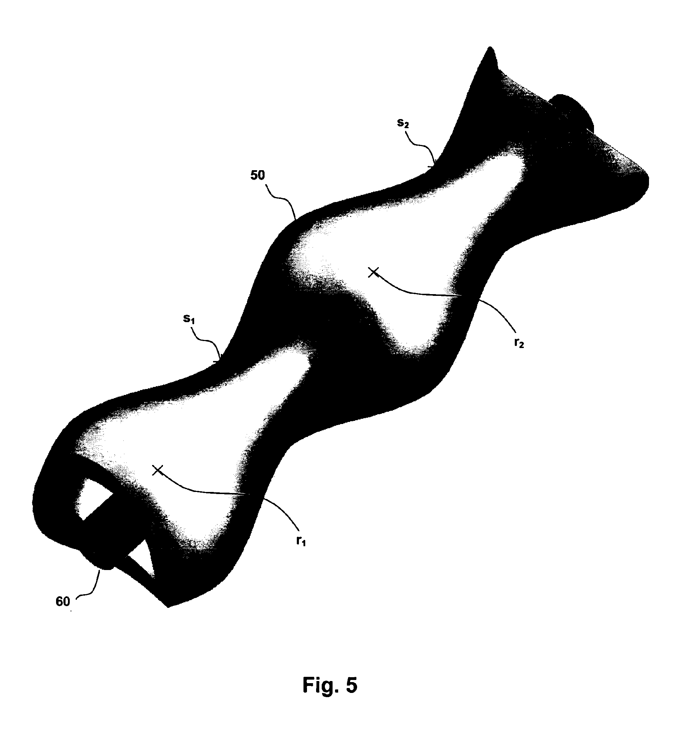

Fig. 5 zeigt ein kurzes Stück einer Kapillare **50** nach Fig. 3a und Fig. 3b, jedoch mit dem Unterschied, dass ein ortsfester, hier zylindrischer Kern **60** in das Zentrum der Kapillare **50** eingebracht wurde, um die am schnellsten fließenden Flüssigkeitsvolumen in Richtung Kapillarwand zu verdrängen, die Längsdurchmischung aufeinanderfolgender Flüssigkeiten weiter zu vermindern und die radiale Durchmischung zu begünstigen. Der Außendurchmesser des Kerns **60** ist dabei kleiner oder gleich der minimalen Innendurchmesser der Querschnitte an den Stellen **r₁, s₁, r₂, s₂,** so dass der Kern in Form eines Voll- oder geschlossenen Hohlzylinders formschlüssig an einigen Stellen der Kapillarinnenseite anliegt oder in einem kleinen Bereich beweglich ist. Hierbei liegt der gerade Kern **60** im Wesentlichen konzentrisch zur Hauptströmungsrichtung bzw. Kapillarenmittelachse 60 oder bewegt sich innerhalb eines kleinen Bereichs.

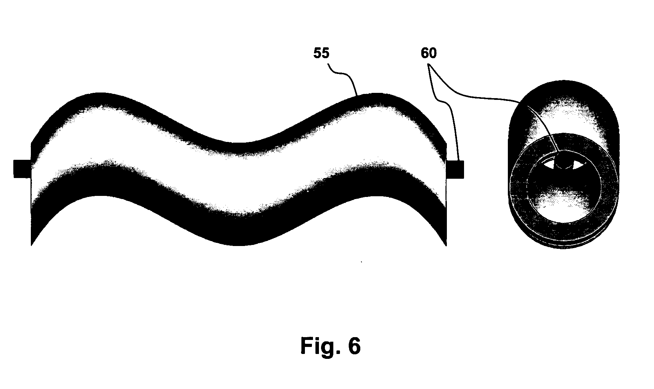

Fig. 6 zeigt ein kurzes Stück einer Kapillare **55** nach Fig. 4a und Fig. 4b, jedoch mit dem Unterschied, dass ein ortsfester, hier zylindrischer Kern **60** in das Zentrum der Kapillare **55** eingebracht wurde, um die am schnellsten fließenden Flüssigkeitsvolumen in Richtung Kapillarwand zu verdrängen, die Längsdurchmischung aufeinanderfolgender Flüssigkeiten weiter zu vermindern und die radiale Durchmischung zu begünstigen.

Der Außendurchmesser des Kerns **60** ist dabei kleiner oder gleich der minimalen Innendurchmesser des Auges **56,** so dass der Kern in Form eines Voll- oder geschlossenen Hohlzylinders formschlüssig an einigen Stellen der Kapillarinnenseite anliegt oder in einem kleinen Bereich beweglich ist. Hierbei liegt der gerade Kern **60** im Wesentlichen konzentrisch zur Hauptströmungsrichtung bzw. Kapillarenmittelachse oder bewegt sich innerhalb eines kleinen Bereichs.

Selbstverständlich ist es auch denkbar den Kern **60,** statt eines in Fig. 6 dargestellten geraden Kerns **60,** in einem gewissen Bereich entsprechend den Auslenkungen folgend gebogen auszubilden.

Da durch die Verbesserung der radialen Durchmischung auch der Wärmetransport von außen durch den Kapillarmantel hindurch in die darin fließende Flüssigkeit begünstigt wird, kann die erfindungsgemäße dispersionsoptimierte Kapillare auch als totvolumenarme Lösung zur Temperaturanpassung, beispielsweise zur Angleichung der Temperatur des Laufmittels und der Probe (vor dem Eintritt in die Trennsäule) an die Temperatur der Trennsäule bzw. deren Innhalt verwendet werden, wobei die Kapillare zur Temperaturanpassung und die Trennsäule beispielsweise in einem Säulenthermostaten, vorzugsweise Kapillare und Trennsäule mit sich und wenigstens eine von beiden mit dem Thermostaten oder Kapillare und Trennsäule voneinander getrennt und beide jeweils mit dem Thermostaten thermisch gekoppelt, untergebracht bzw. angeordnet sind.

Auf diese Weise kann die Trennleistung der Anlage durch die Einstellung verbesserter thermischer Bedingungen für die Trennung der Probenbestandteile durch die Säule optimiert werden, da eine erfindungsgemäße Kapillare für die selbe Temperaturänderung des darin fließenden Laufmittels bzw. Probe verglichen mit anderen Bauformen weniger Totvolumen benötigt.

Vor allem die Ausführungsform mit periodisch elliptischen Querschnittsmodifikationen bietet den besonderen Vorteil, dass durch den weitgehend geradlinigen Verlauf der Kapillare von der enthaltenen Flüssigkeit keine nennenswerten Umwege durchflossen werden müssen, und so eine Verzögerung der chromatographischen Analyse zu Gunsten einer besseren Temperierung vermieden werden kann. Koppelt man die Ausführungsform einer Kapillare mit periodisch elliptischen Querschnittsmodifikationen, gegebenenfalls mit Kern, thermisch mit einem Thermostaten, erhält man eine Anordnung, mit der man die Komponenten einer Chromatographieanlage volumenarm verbinden kann, und gegebenenfalls eine Temperierung des darin strömenden Mediums optimiert durchführen kann, und dabei, verglichen mit mit zylindrischem oder regelmäßigem Querschnitt ausgeführten Verbindungen, weniger Längsdurchmischung hintereinander fließender Flüssigkeiten verursacht wird, was wiederum die Trennleistung einer HPLC-Anlage verbessert.

## Patentansprüche

1. Kapillarartige Verbindung zur Leitung von Flüssigkeiten, insbesondere für die Flüssigkeitschromatographie,
**dadurch gekennzeichnet, dass**
die Verbindung (50, 55) in Richtung einer Hauptströmungsrichtung wechselnde Innenquerschnitte in Form und/oder Lage aufweist, so dass wechselnde radiale Strömungskomponenten erzwungen und **dadurch** die radiale Durchmischung der strömenden Flüssigkeiten in der Verbindung verstärkt und **dadurch** die Ausbildung des vom streng kreisförmig ausgebildeten Querschnitt her bekannten parabolischen Strömungsprofils gestört und behindert wird.

2. Verbindung nach Anspruch 1, **dadurch gekennzeichnet, dass** die Verbindung (50) im Wesentlichen rohrförmig ausgebildet ist und die Mittelpunkte der wechselnden Innenquerschnitte auf einer Achse liegen und sich die Innenquerschnitte in ihrer Form ändern.

3. Verbindung nach Anspruch 1, **dadurch gekennzeichnet, dass** die Querschnittsflächen in Hauptströmungsrichtung der Verbindung konstant sind und sich die Innenquerschnitte in ihrer Lage ändern.

4. Verbindung nach einem der vorhergehenden Ansprüche, **dadurch gekennzeichnet, dass** die Innenquerschnitte ihre Lage und/oder Form in Hauptströmungsrichtung periodisch ändern.

5. Verbindung nach einem der vorhergehenden Ansprüche, **dadurch gekennzeichnet, dass** in der Verbindung ein länglicher Kern (60) eingebracht ist, dessen Außendurchmesser kleiner als der Innendurchmesser der Verbindung (50, 55) ist.

6. Verbindung Anspruch 5, **dadurch gekennzeichnet, dass** der Kern (60) konzentrische zur Mittelpunktskurve der Verbindung (50, 55) angeordnet ist.

7. Verbindung nach Anspruch 1 oder 2, **dadurch gekennzeichnet, dass** der Kern (60) einen konstanten Außenumfang besitzt.

8. Verbindung nach einem der vorhergehenden Ansprüche, **dadurch gekennzeichnet, dass** Änderungen der Form und/oder Lage des Verbindungsquerschnitts nicht rotationssymmetrisch zur Achse der Hauptströmungsrichtung ausgebildet sind.

9. Anordnung für die Flüssigkeitschromatographie mit wenigstens einer kapillarartigen Verbindung (50, 55) nach einem der vorherigen Ansprüche.
